# FASCICULE DE BREVET EUROPEEN

(11) **EP 0 524 044 B1**
(45) Date de publication et mention de la délivrance du brevet: **15.03.1995**
(21) Numéro de dépôt: 92401832.8
(22) Date de dépôt: 29.06.1992
(51) Int. Cl.: B64C 27/82

(54) **Système anticouple pour hélicoptère**
Gegendrehmomentanlage eines Hubschraubers
Helicopter anti-torque system

(30) Priorité: 16.07.1991 FR 9108973
(43) Date de publication de la demande: 20.01.1993
(73) Titulaire: EUROCOPTER FRANCE, F-13725 Marignane Cédex (FR)
(72) Inventeur: Allongue, Marc, F-13009 Marseille (FR)
(74) Mandataire: Bonnetat, Christian

(56) Documents cités:
- FR-A- 2 412 462
- GB-A- 2 238 996
- US-A- 2 609 053

## Description

La présente invention concerne un système anticouple pour hélicoptère et un hélicoptère pourvu d'un tel système anticouple. Elle s'applique plus particulièrement aux hélicoptères à rotor principal de sustentation et de propulsion unique dont l'entraînement en rotation est mécanique.

Par exemple, par les documents GB-A-289 248, US-A-2 322 715, US-A-2 369 652 et US-A-2 609 053, on connaît des systèmes anticouple pour aéronef à voilure tournante comportant un rotor auxiliaire, dont l'axe est transversal par rapport au fuselage dudit aéronef et qui est disposé au voisinage de l'extrémité de la queue de celui-ci. Un tel rotor de queue peut être utilisé non seulement pour contrebalancer le couple exercé sur le fuselage par l'entraînement de son rotor principal de sustentation et de propulsion, mais encore pour piloter l'aéronef en lacet.

De tels systèmes anticouple à rotor auxiliaire sont particulièrement fiables et efficaces. Ils sont aptes à fournir en permanence, dans toutes les phases de vol, la poussée transversale nécessaire à l'action anticouple et au pilotage en lacet. On leur reproche cependant parfois d'être lourds et bruyants et de nécessiter une puissance importante. Toutefois, lorsqu'ils sont réalisés conformément aux modes de réalisation les plus modernes, par exemple illustrés par le document US-A-4 585 391, leur masse, le bruit qu'ils engendrent et la puissance qu'ils nécessitent sont fortement diminués. De plus, on remarquera que, lorsqu'ils sont carénés, les systèmes anticouple à rotor auxiliaire sont totalement satisfaisants en ce qui concerne la sécurité, aussi bien au sol qu'en vol.

Par ailleurs, par le document FR-A-1 332 300, on connaît un système anticouple à soufflage pour aéronef à voilure tournante mettant en oeuvre le principe de circulation d'air autour de la queue de l'aéronef. De l'air sous pression, circulant dans la queue de l'aéronef, est éjecté par des fentes longitudinales et latérales, dirigées vers le bas et disposées à l'aplomb du souffle vertical descendant de la voilure tournante. Il en résulte une force aérodynamique transversale, appliquée audit fuselage et susceptible de s'opposer au couple d'entraînement du rotor principal de sustentation et de propulsion, lorsque lesdites fentes sont pratiquées du côté approprié du fuselage.

De tels systèmes anticouple à soufflage sont mécaniquement simples, mais ils sont inefficaces dans certains cas de vol lorsque le rotor principal n'est pas porteur, par exemple en en vol de descente, car alors il n'y a pas de circulation d'air autour de la poutre de queue. De plus, ils sont également inefficaces en vol à vitesse élevée, car alors la composante longitudinale de la vitesse d'avancement est bien plus importante que la composante verticale issue de la voilure tournante, ce qui annule l'effet du soufflage.

Pour tenter de remédier à ces insuffisances des systèmes anticouple à soufflage, le document US-A-4 200 252 prévoit des moyens supplémentaires pour engendrer un jet latéral, susceptible de fournir une force anticouple additionnelle, et de permettre les manoeuvres en lacet, dans tous les cas de vol.

Cependant, le système anticouple composite du document US-A-4 200 252, bien que présentant une bonne maniabilité, une bonne stabilité et une faible sensibilité au vent latéral, nécessite une puissance au moins égale à celle d'un système anticouple à rotor caréné performant. En effet, le rendement du jet latéral est faible. Aussi, en vol stationnaire sans vent la puissance nécessaire est voisine de celle nécessaire à un système anticouple à rotor caréné performant. En revanche, lorsque le vent latéral est important', la puissance exigée devient nettement supérieure à celle de ce dernier. De plus, la masse de ce système anticouple composite est au moins égale à celle d'un système anticouple à rotor caréné.

La présente invention a pour objet un système anticouple à rotor de queue perfectionné permettant, pour un diamètre déterminé du rotor anti-couple, une augmentation de la masse décollable ou, pour une masse décollable déterminée, une réduction du diamètre du rotor anti-couple, ainsi qu'une atténuation du bruit engendré, particulièrement pendant les phases de décollage, d'atterrissage et de vol stationnaire stabilisé.

A cette fin, selon l'invention, le système anticouple pour hélicoptère ayant un seul rotor principal sustentateur et propulseur à entraînement mécanique et un fuselage allongé vers l'arrière, du type comprenant :
- un rotor auxiliaire anticouple, dont l'axe est sensiblement transversal par rapport audit fuselage allongé et qui est disposé à l'extrémité arrière dudit fuselage pour engendrer une première force transversale s'opposant au couple exercé sur le fuselage par l'entraînement en rotation du rotor principal dudit hélicoptère ;
- ainsi que des premiers moyens de commande dudit rotor auxiliaire anticouple, permettant de contrôler l'intensité de ladite première force transversale,
est remarquable en ce qu'il comprend de plus :
- un dispositif anticouple à soufflage comprenant au moins une fente longitudinale pratiquée latéralement dans la partie dudit fuselage allongé soumise au souffle descendant dudit rotor principal, ladite fente longitudinale étant alimentée en fluide sous pression qu'elle éjecte vers le bas de façon au moins approximativement tangentielle à ladite partie de fuselage, pour engendrer une deuxième force transversale de même sens que ladite première force ;
- des deuxième moyens de commande dudit dispositif anticouple à soufflage, permettant de contrôler l'intensité de ladite deuxième force transversale ; et
- au moins un empennage vertical, qui est disposé à l'extrémité arrière dudit fuselage allongé et dont le profil est tel qu'il engendre, en vol d'avancement, une portance latérale, de même sens que lesdites première et seconde forces transversales et dont l'intensité est telle que ladite portance latérale assure au moins la plus grande partie de la fonction anticouple en vol d'avancement; en ce que lesdits premiers et lesdits deuxièmes moyens de commande sont combinés pour être commandables à partir d'un organe d'actionnement unique; et en ce que :
- en vol stationnaire ou à très faible vitesse d'avancement, ledit dispositif anticouple à soufflage assure au moins la plus grande partie de la fonction anticouple ;
- tandis que, dans tous les cas de vol, le rotor auxiliaire anticouple assure le contrôle de l'hélicoptère en lacet et le complément de la fonction anti-couple.

Ainsi, grâce à la présente invention, le rotor auxiliaire anticouple n'a à assurer, en vol d'avancement, essentiellement que le contrôle de l'hélicoptère en lacet et, en vol stationnaire, tout au plus qu'une partie de la fonction anticouple.

Le rotor auxiliaire anticouple peut donc être de dimensions réduites, de sorte que sa masse, le bruit qu'il engendre et la puissance qu'il nécessite sont relativement faibles, d'autant plus qu'il peut être choisi du type caréné à rendement élevé.

De préférence, le rotor auxiliaire anticouple et le dispositif anticouple à soufflage sont dimensionnés pour que, en vol stationnaire, la fonction anticouple soit assurée jusqu'à 70% par le dispositif anticouple à soufflage et pour au moins 30% par ledit rotor auxiliaire anticouple.

Ainsi, on arrive a un compromis pour lequel la masse, le bruit et la puissance consommée par le rotor auxiliaire anticouple sont faibles.

On comprendra de plus que, la réduction du dimensionnement et de la puissance du rotor auxiliaire anticouple entraînant un gain de masse, il en résulte une augmentation de la charge utile de l'hélicoptère.

Avantageusement, ledit empennage vertical arrière est profilé de façon que, en vol d'avancement à la vitesse de croisière nominale, ladite portance latérale assure la totalité de la fonction anticouple, ainsi que la stabilité en lacet de l'aéronef. Ainsi, seul le contrôle en lacet est assuré par le rotor auxiliaire anticouple, dont le dimensionnement peut donc être réduit au maximum.

Pour pouvoir ajuster la valeur de ladite portance latérale en fonction de la vitesse d'avancement, on prévoit de préférence une gouverne de bord de fuite sur ledit empennage vertical, ainsi que des troisièmes moyens de commande pour contrôler ladite gouverne.

Il est avantageux que lesdits premiers et deuxièmes moyens de commande, ainsi qu'éventuellement lesdits troisièmes moyens de commande, soient combinés pour être commandables à partir d'un organe d'actionnement unique. Cet organe d'actionnement unique peut être un palonnier à la disposition du pilote de l'hélicoptère.

De façon connue, ledit rotor auxiliaire anticouple peut être du type à pales à pas variable. Dans ce cas, lesdits premiers moyens de commande peuvent contrôler l'intensité de ladite première force transversale par commande du pas des pales dudit rotor auxiliaire anticouple.

Ladite fente longitudinale peut être alimentée en fluide par les gaz d'échappement du groupe moteur dudit aéronef par l'intermédiaire d'une vanne réglable. Dans ce cas, lesdits deuxièmes moyens de commande contrôlent l'intensité de la deuxième force transversale, par commande de ladite vanne.

Toutefois, en variante, ladite fente longitudinale peut être alimentée en fluide par l'intermédiaire d'une machine soufflante prévue à cet effet à bord dudit aéronef, lesdits deuxièmes moyens de commande contrôlant alors l'intensité de ladite deuxième force transversale par commande de ladite machine soufflante. Une telle commande peut alors être obtenue par réglage du pas des aubes à pas variable de ladite machine soufflante.

Dans ce dernier cas, on peut prévoir un couplage de la commande du pas des pales du rotor auxiliaire anticouple et du pas des aubes de la machine soufflante, de telle sorte qu'une variation commandée du pas des unes entraîne simultanément une variation du pas des autres.

Bien entendu, lesdits premiers, deuxièmes et troisièmes moyens de commande sont couplés avec les commandes classiques de l'aéronef. Un tel couplage peut être réalisé avec la position de pied (comme indiqué ci-dessus), ou avec la commande de pas collectif, ou bien encore avec la commande de pas cyclique longitudinal.

La présente invention concerne également un hélicoptère pourvu d'un tel système anticouple.

A cette fin, selon l'invention, l'hélicoptère à rotor sustentateur et propulseur unique à entraînement mécanique et à fuselage allongé vers l'arrière, pourvu d'un système anticouple comprenant :
- un rotor auxiliaire anticouple, dont l'axe est sensiblement transversal par rapport audit fuselage allongé et qui est disposé à l'extrémité arrière dudit fuselage pour engendrer une première force transversale s'opposant au couple exercé sur le fuselage par l'entraînement du rotor sustentateur et propulseur dudit hélicoptère ;
- ainsi que des premiers moyens de commande dudit rotor auxiliaire anticouple, permettant de contrôler l'intensité de ladite première force transversale,
est remarquable en ce que ledit système anticouple comporte de plus :
- un dispositif anticouple à soufflage comprenant au moins une fente longitudinale pratiquée latéralement dans la partie dudit fuselage allongé soumise au souffle descendant dudit rotor sustentateur et propulseur, ladite fente longitudinale étant alimentée en fluide sous pression qu'elle éjecte vers le bas de façon au moins approximativement tangentielle à ladite partie de fuselage, pour engendrer une deuxième force transversale de même sens que ladite première force ;
- des deuxièmes moyens de commande dudit dispositif anticouple à soufflage, permettant de contrôler l'intensité de ladite deuxième force transversale ; et
- au moins un empennage vertical, qui est disposé à l'extrémité arrière dudit fuselage allongé et dont le profil est tel qu'il engendre, en vol d'avancement, une portance latérale, de même sens que lesdites première et seconde forces transversales et dont l'intensité est telle que ladite portance latérale assure au moins la plus grande partie de la fonction anticouple en vol d'avancement; en ce que lesdits premiers et lesdits deuxièmes moyens de commande sont combinés pour être commandables à partir d'un organne d'actionnement unique ; et, en ce que :
- en vol stationnaire ou à très faible vitesse d'avancement, ledit dispositif anticouple à soufflage assure au moins la plus grande partie de la fonction anticouple ;
- tandis que, dans tous les cas de vol, le rotor auxiliaire anticouple assure le contrôle de l'hélicoptère en lacet et le complément de la fonction anti-couple.

L'hélicoptère peut alors comporter, pour son système anticouple, les différents perfectionnements décrits ci-dessus.

Les figures du dessin annexé feront bien comprendre comment l'invention peut être réalisée. Sur ces figures, des références identiques désignent des éléments identiques ou semblables.

La figure 1 est une vue en perspective schématique d'un hélicoptère pourvu d'un système anticouple composite, conforme à la présente invention.

Les figures 2 et 3 sont respectivement des coupes transversales selon les lignes II-II et III-III de la figure 1, ainsi d'ailleurs que de la figure 4.

La figure 4 est une vue en perspective schématique d'un hélicoptère pourvu d'une variante de réalisation du système anticouple composite conforme à la présente invention.

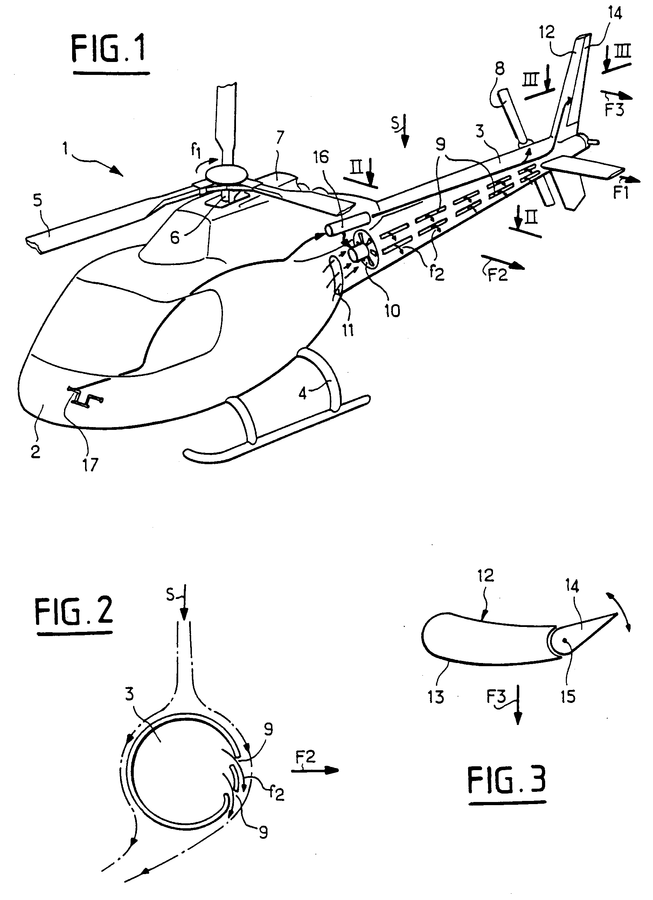

L'hélicoptère 1, conforme à la présente invention et montré par la figure 1, comporte, à l'avant, une cabine 2 prolongée vers l'arrière par une queue 3. Il est pourvu d'un atterrisseur 4, et d'un rotor principal de sustentation et de propulsion 5. Ce rotor principal est susceptible d'être entraîné en rotation autour de son axe par un groupe moteur 7 (flèche f1). L'entraînement en rotation de ce rotor 5 par les organes de transmission mécanique provoque sur le fuselage 2,3 un couple tendant à faire tourner ce dernier autour de son axe de rotation 6.

A l'extrémité arrière de la queue 3, l'hélicoptère 1 comporte un rotor auxiliaire anticouple 8 à pas variable, qui, lorsqu'il tourne autour de son axe (non représenté sur la figure 1) transversal à ladite queue 3, engendre une force transversale F1 s'opposant au couple exercé sur ledit fuselage 2,3 par l'entraînement du rotor principal 5.

De plus, le long de la queue 3 de l'hélicoptère 1 sont disposées des fentes latérales et longitudinales 9, à travers lesquelles est déchargé un flux de gaz circulant dans ladite queue 3 et provenant soit du groupe moteur 7 (gaz d'échappement), soit, comme cela est représenté sur les figures, d'une machine soufflante 10 à aubes à pas variable, prévue à cet effet et alimentée en air par des prises d'air 11, pratiquées dans le fuselage.

La zone de la queue 3 dans laquelle sont pratiquées les fentes 9 est soumise au souffle descendant du rotor principal 5 (flèche S).

Ainsi, comme cela est expliqué dans le document FR-A-1 332 300, lorsque les fentes 9 éjectent vers le bas, de façon au moins approximativement tangentielle à la queue 3, le flux de gaz circulant dans la queue 3 (voir les flèches f2 sur les figures 1 et 2) et que le rotor 5 tourne, il apparaît une force F2, tendant à s'opposer au couple exercé par l'entraînement rotor principal 5 sur le fuselage 2,3.

Par ailleurs, à l'extrémité arrière de la queue 3 est prévue un empennage vertical 12, dont le profil 13 est susceptible d'engendrer, lorsque l'hélicoptère 1 est en vol d'avancement, une portance latérale F3 s'opposant au couple exercé par le rotor principal 5 sur le fuselage 2,3 (voir également la figure 3). Eventuellement, le bord de fuite de l'empennage vertical 12 est pourvu d'une gouverne 14, susceptible de tourner autour d'un axe vertical 15.

A bord de l'hélicoptère 1 est prévu un dispositif de commande 16, lui-même actionné par un palonnier 17 à la disposition du pied du pilote. Le dispositif de commande 16 contrôle le pas du rotor auxiliaire 8 et le débit de fluide traversant les fentes 9, de façon à contrôler l'intensité des forces F1 et F2. Dans le cas où le fluide traversant les fentes 9 est constitué par les gaz d'échappement du groupe moteur 7, le dispositif 16 commande une vanne (non représentée) à travers laquelle passent lesdits gaz d'échappement en direction des fentes 9. Dans le cas, représenté sur la figure 1, où le fluide traversant les fentes 9 est l'air soufflé par une soufflante 10, le dispositif 16 commande cette soufflante, par exemple par le pas des aubes de son rotor.

Si elle existe, la gouverne 14 est également commandée par le dispositif 16, afin de contrôler l'intensité de la force F3.

Sur la figure 1, les différentes liaisons entre le palonnier 17 et le dispositif de commande 16 et entre ce dernier et le rotor 8, la soufflante 10 et la gouverne 14 sont représentées par des traits gras.

On remarquera que l'on peut prévoir un couplage mécanique, hydraulique ou électrique entre le pas des pales du rotor 8 et le pas des aubes de la soufflante 10 (ou la vanne de contrôle des gaz d'échappement du groupe moteur 7).

Quoi qu'il en soit, l'action du dispositif 16 est telle que:
- en vol d'avancement, la fonction anticouple et la stabilité en lacet sont assurées par la portance latérale F3 de l'empennage 12, éventuellement associée à la gouverne 14, tandis que le pilotage en lacet est obtenu par la force transversale F1 engendrée par le rotor auxiliaire 8 ; et
- en vol stationnaire ou à faible vitesse d'avancement, la fonction anticouple est assurée, jusqu'à 70%, par la force transversale F2 engendrée par la soufflante 10 (ou par les gaz d'échappement du groupe moteur 7) et, pour au moins 30%, par le rotor auxiliaire 8, lequel rotor assure aussi dans ces cas de vol, le pilotage en lacet de l'hélicoptère.

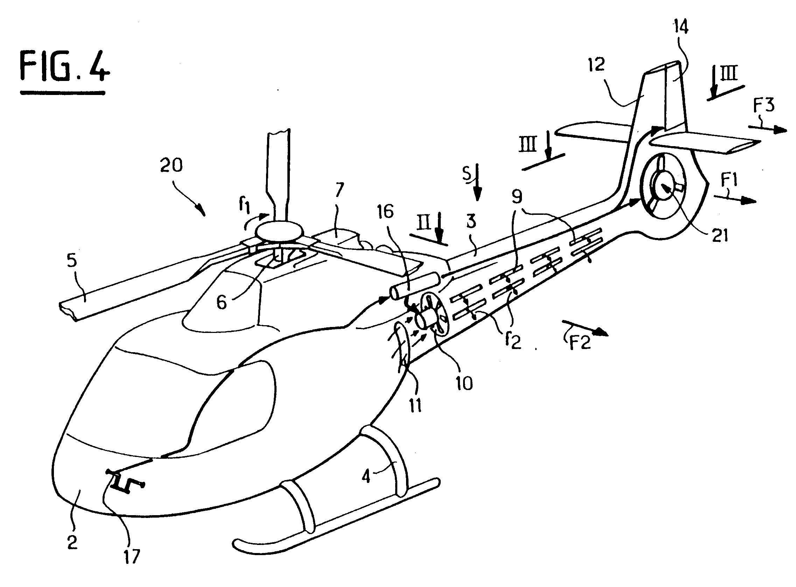

L'hélicoptère 20, montré par la figure 4, est pour l'essentiel identique à l'hélicoptère 1 de la figure 1. Toutefois, dans ce cas, le rotor auxiliaire anticouple 8 est remplacé par un rotor caréné perfectionné 21, du type connu sous le nom de FENESTRON (marque déposée). Les performances du rotor 21 étant optimisées, ce dernier peut être de dimensions inférieures à elles du rotor auxiliaire 8, de sorte que la masse, le bruit engendré et la puissance nécessaire à l'entraînement du rotor 21 sont encore diminués.

## Revendications

1. Système anticouple pour un hélicoptère (1,20) ayant un seul rotor principal sustentateur et propulseur à entraînement mécanique (5) et un fuselage (2,3) allongé vers l'arrière,
caractérisé :
- en ce qu'il comporte, en combinaison :
. un rotor auxiliaire anticouple (8,21), dont l'axe est sensiblement transversal par rapport audit fuselage allongé et qui est disposé à l'extrémité arrière dudit fuselage pour engendrer une première force transversale (F1) s'opposant au couple exercé sur ledit fuselage par l'entraînement en rotation de son rotor principal ;
. un dispositif anticouple à soufflage (9,10,11) comprenant au moins une fente longitudinale (9) pratiquée latéralement dans la partie (3) dudit fuselage allongé soumise au souffle descendant (S) dudit rotor principal, ladite fente longitudinale étant alimentée en fluide sous pression qu'elle éjecte vers le bas de façon au moins approximativement tangentielle à ladite partie de fuselage, pour engendrer une deuxième force transversale (F2) de même sens que ladite première force (F1) ;
. au moins un empennage vertical (12), qui est disposé à l'extrémité arrière dudit fuselage allongé et dont le profil est tel qu'il engendre, en vol d'avancement, une portance latérale (F3), de même sens que lesdites première et seconde forces transversales et dont l'intensité est telle que ladite portance latérale assure au moins la plus grande partie de la fonction anticouple en vol d'avancement ;
. ainsi que des premiers moyens (16,17) de commande dudit rotor auxiliaire anticouple, permettant de contrôler l'intensité de ladite première force transversale ; et
. des deuxièmes moyens (16,17) de commande dudit dispositif anticouple à soufflage, permettant de contrôler l'intensité de ladite deuxième force transversale ;
- en ce que lesdits premiers et lesdits deuxièmes moyens de commande sont combinés pour être commandables à partir d'un organe d'actionnement unique (17) ; et
- en ce que :
. en vol stationnaire ou à très faible vitesse d'avancement, ledit dispositif anticouple à soufflage (9, 10, 11) assure au moins la plus grande partie de la fonction anticouple ;
. tandis que, dans tous les cas de vol, le rotor auxiliaire anticouple (8,21) assure le contrôle de l'aéronef en lacet et le complément de la fonction anticouple.

2. Système selon la revendication 1,
caractérisé en ce que, en vol stationnaire, la fonction anticouple est assurée, jusqu'à 70%, par le dispositif anticouple à soufflage (9,10,11) et, pour au moins 30%, par ledit rotor auxiliaire anticouple (8,21).

3. Système selon l'une des revendications 1 ou 2,
caractérisé en ce que, en vol d'avancement à la vitesse de croisière nominale, ladite portance latérale (F3) engendrée par ledit empennage vertical (12) assure la totalité de la fonction anticouple, ainsi que la stabilité en lacet de l'aéronef.

4. Système selon l'une quelconque des revendications 1 à 3,
caractérisé en ce que ledit empennage vertical (12) comporte une gouverne de bord de fuite (14) et en ce que sont prévus des troisièmes moyens de commande (16,17) pour contrôler ladite gouverne.

5. Système selon la revendication 4,
caractérisé en ce que lesdits troisièmes moyens de commande sont combinés auxdits premiers et deuxièmes moyens de commande pour être commandables à partir dudit organe d'actionnement unique (17).

6. Système selon l'une quelconque des revendications 1 à 5,
caractérisé en ce que lesdits premiers moyens de commande contrôlent l'intensité de la première force transversale (F1), par commande du pas des pales dudit rotor auxiliaire anticouple (8,21).

7. Système selon l'une quelconque des revendications 1 à 6,
caractérisé en ce que ladite fente longitudinale (9) est alimentée en gaz d'échappement du groupe moteur dudit aéronef par l'intermédiaire d'une vanne et en ce que lesdits deuxièmes moyens de commande contrôlent l'intensité de la deuxième force transversale, par commande de ladite vanne.

8. Système selon l'une quelconque des revendications 1 à 6,
caractérisé en ce que ladite fente longitudinale (9) est alimentée en air par l'intermédiaire d'une machine soufflante (10) et en ce que lesdits deuxièmes moyens de commande contrôlent l'intensité de la deuxième force transversale, par commande de ladite machine soufflante (10).

9. Système selon les revendications 6 et 8,
caractérisé en ce qu'il comporte un couplage de la commande du pas des pales du rotor auxiliaire anticouple (8,21) et du pas des aubes de la machine soufflante (10).

10. Hélicoptère (1,20) à rotor sustentateur et propulseur unique à entraînement mécanique (51) et à fuselage (2,3) allongé vers l'arrière,
caractérisé :
- en ce qu'il est pourvu d'un système anticouple comprenant, en combinaison :
. un rotor auxiliaire anticouple (8,21) dont l'axe est sensiblement transversal par rapport audit fuselage allongé et qui est disposé à l'extrémité arrière dudit fuselage pour engendrer une première force transversale (F1) s'opposant au couple exercé sur ledit fuselage par l'entraînement du rotor sustentateur et propulseur ;
. un dispositif anticouple à soufflage (9,10,11) comprenant au moins une fente longitudinale (9) pratiquée latéralement dans la partie (3) dudit fuselage allongé soumise au souffle descendant (S) dudit rotor sustentateur et propulseur, ladite fente longitudinale étant alimentée en fluide sous pression qu'elle éjecte vers le bas de façon au moins approximativement tangentielle à ladite partie de fuselage, pour engendrer une deuxième force transversale (F2) de même sens que ladite première force (F1) ;
. au moins un empennage vertical (12), qui est disposé à l'extrémité arrière dudit fuselage allongé et dont le profil est tel qu'il engendre, en vol d'avancement, une portance latérale (F3), de même sens que lesdites première et seconde forces transversales et dont l'intensité est telle que ladite portance latérale assure au moins la plus grande partie de la fonction anticouple en vol d'avancement ;
. ainsi que des premiers moyens (16,17) de commande dudit rotor auxiliaire anticouple, permettant de contrôler l'intensité de ladite première force transversale ; et
. des deuxièmes moyens (16,17) de commande dudit dispositif anticouple à soufflage, permettant de contrôler l'intensité de ladite deuxième force transversale ;
- en ce que lesdits premiers et lesdits deuxièmes moyens de commande sont combinés pour être commandables à partir d'un organe d'actionnement unique (17) ; et
- en ce que :
. en vol stationnaire ou à très faible vitesse d'avancement, ledit dispositif anticouple à soufflage (9,10,11) assure au moins la plus grande partie de la fonction anticouple ;
. tandis que, dans tous les cas de vol, le rotor auxiliaire anticouple (8,21) assure le contrôle de l'hélicoptère en lacet et le complément de la fonction anticouple.

11. Hélicoptère selon la revendication 10,
caractérisé en ce que ledit système anticouple comporte les particularités spécifiées sous l'une quelconque des revendications 2 à 9.

## Claims

1. An anti-torque system for a helicopter (1, 20) having a single mechanically driven main lift and propulsion rotor (5) and a rearwardly elongate fuselage (2, 3), characterized in that it comprises in combination:
an auxiliary anti-torque rotor (8, 21) whose axis is substantially transversal relative to said elongate fuselage and which is disposed at the rear end of said fuselage to generate a first transverse force (F1) opposing the torque exerted on said fuselage by applying rotary drive to its main rotor;
a blowing anti-torque device (9, 10, 11) comprising at least one longitudinal slot (9) formed laterally in the portion (3) of said elongate fuselage which is subjected to the downdraft (S) from said main rotor, which longitudinal slot is fed with fluid under pressure that it ejects downwards in a manner that is at least approximately tangential to said portion of the fuselage, thereby generating a second transverse force (F2) in the same direction as said first transverse force (F1),
at least one vertical tail fin (12) disposed at the rear end of said elongate fuselage and having a profile such that during forwards flight it generates lateral lift (F3) in the same direction as said first and second transverse forces and of a magnitude such that said lateral lift provides at least the major portion of the anti-torque function during forwards flight;
together with first means (16, 17) for controlling said auxiliary anti-torque rotor, enabling the magnitude of said first transverse force to be controlled; and
second control means (16, 17) for controlling said blowing anti-torque device and enabling the magnitude of said second transverse force to be controlled;
in that said first and second control means are combined to be controllable from a single actuator member (17); and
in that:
when hovering or flying at a very low forwards speed said blowing anti-torque device (9, 10, 11) provides at least the major fraction of the anti-torque function;
while under all flight circumstances, the auxiliary anti-torque rotor (8, 21) provides yaw control for the aircraft together with the remainder of the anti-torque function.

2. A system according to claim 1, characterized in that in stationary flight, up to 70% of the anti-torque function is provided by the blowing anti-torque device (9, 10, 11) and at least 30% thereof is provided by said auxiliary anti-torque rotor (8, 21).

3. A system according to claim 1 or 2, characterized in that in forwards flight at a nominal cruising speed, said lateral lift (F3) generated by said vertical tail fin (12) provides all of the anti-torque function, together with the yaw stability of the aircraft.

4. A system according to any one of claims 1 to 3, characterized in that said vertical tail fin (12) includes a trailing edge control surface (14) and in that third control means (16, 17) are provided for controlling said control surface.

5. A system according to claim 4, characterized in that said third control means are combined with said first and second control means so as to be controllable from said single actuator member (17).

6. A system according to any one of claims 1 to 5, characterized in that said first control means control the magnitude of said first transverse force (F1) by controlling the pitch of the blades of said auxiliary anti-torque rotor (8, 21).

7. A system according to any one of claims 1 to 6, characterized in that said longitudinal slot (9) is fed with the exhaust gases from the engine unit of said aircraft via a valve, and in that said second control means control the magnitude of said second transverse force by controlling said valve.

8. A system according to any one of claims 1 to 6, characterized in that said longitudinal slot (9) is fed with air by a blower machine (10) and in that said second control means control the magnitude of the second transverse force by controlling said blower machine (10).

9. A system according to claims 6 and 8, characterized in that it includes coupling between pitch control of the blades of the auxiliary anti-torque rotor (8, 21) and pitch control of the vanes of the blower machine (10).

10. A helicopter (1, 20) having a single mechanically-driven lift and propulsion rotor (51) and a fuselage (2, 3) that is rearwardly elongate, the helicopter being characterized in that it is provided with an anti-torque system comprising, in combination:
an auxiliary anti-torque rotor (8, 21) whose axis is substantially transversal relative to said elongate fuselage and which is disposed at the rear end of said fuselage to generate a first transverse force (F1) opposing the torque exerted on said fuselage by driving said lift and propulsion rotor;
a blowing anti-torque device (9, 10, 11) including at least one longitudinal slot (9) formed laterally in the portion (3) of said elongate fuselage which is subjected to the downdraft (S) of said lift and propulsion rotor, said longitudinal slot being fed with fluid under pressure which it ejects downwards in a manner that is at least approximately tangential to said portion of the fuselage, thereby generating a second transverse force (F2) in the same direction as said first transverse force (F1);
at least one vertical tail fin (12) which is disposed at the rear end of said elongate fuselage and having a profile such that during forward flight it generates lateral lift (F3) in the same direction as said first and second transverse forces and at a magnitude such that said lateral lift provides at least the major portion of the anti-torque function during forwards flight;
together with first control means (16, 17) for controlling said auxiliary anti-torque rotor, enabling the magnitude of said first transverse force to be controlled; and
second control means (16, 17) controlling said blowing anti-torque device enabling the magnitude of said second transverse force to be controlled;
in that said first and second control means are combined to be controllable from a single actuator member (17); and
in that:
when hovering or in forwards flight at very slow speed, said blowing anti-torque device (9, 10, 11) provides at least the major fraction of the anti-torque function;
while under all flight circumstances, the auxiliary anti-torque rotor (8, 21) provides yaw control for the helicopter together with the remainder of the anti-torque function.

11. A helicopter according to claim 10, characterized in that said anti-torque system includes the features specified in any one of claims 2 to 9.

## Patentansprüche

1. Gegendrehmomentsystem für einen Hubschrauber (1,20) mit einem einzigen mechanisch angetriebenen Hauptrotor für Auf- und Vortrieb (5) und einem nach hinten langgestreckten Rumpf (2,3),
dadurch gekennzeichnet,
- daß er kombiniert umfaßt:
. einen Gegendrehmoment-Hilfsrotor (8,21), dessen Achse etwa quer zum langgestreckten Rumpf verläuft und der am hinteren Ende des Rumpfes angeordnet ist und eine erste Querkraft (F1) erzeugt, die dem auf den Rumpf durch die Drehung des Hauptrotors ausgeübten Drehmoment entgegenwirkt;
. eine Gegendrehmoment-Blasvorrichtung (9,10,11) mit mindestens einem Längsschlitz (9) seitlich in dem Teil (3) des langgestreckten Rumpfes, an den der Abwärtsstrom (S) des Hauptrotors gelangt, wobei durch den Längsschlitz nach unten, mindestens annähernd tangential zum Rumpfteil ein Medium unter Druck ausgestoßen wird, durch das eine zweite Querkraft (F2) gleichgerichtet zur ersten Kraft (F1) erzeugt wird;
. mindestens ein Seitenleitwerk (12), das am hinteren Ende des langgestreckten Rumpfes angeordnet ist und dessen Profil derart ist, daß es bei Vorwärtsflug einen Seitenauftrieb (F3) gleichgerichtet zur ersten und zweiten Querkraft erzeugt, dessen Stärke derart ist, daß der Seitenauftrieb zumindest den größten Teil der Gegendrehmomentfunktion bei Vorwärtsflug gewährleistet;
. sowie erste Steuermittel (16,17) des Gegendrehmoment-Hilfsrotors, durch die die Stärke der ersten Querkraft geregelt werden kann, und
. zweite Steuermittel (16,17) der Gegendrehmoment-Blasvorrichtung, durch die die Stärke der zweiten Querkraft geregelt werden kann;
- daß die ersten und zweiten Steuermittel kombiniert sind, so daß sie durch ein einziges Betätigungsorgan (17) bedient werden können, und
- dadurch daß:
. bei Schwebeflug oder sehr niedriger Vorwärtsgeschwindigkeit die Gegendrehmoment-Blasvorrichtung (9,10,11) mindestens den größten Teil der Gegendrehmomentfunktion gewährleistet;
. während bei allen anderen Flugzuständen der Gegendrehmoment-Hilfsrotor (8,21) die Giersteuerung des Luftfahrzeugs und die restliche Gegendrehmomentfunktion gewährleistet.

2. System nach Anspruch 1,
dadurch gekennzeichnet, daß bei Schwebeflug die Gegendrehmomentfunktion bis zu 70 % durch die Gegendrehmoment-Blasvorrichtung (9,10,11) und zu mindestens 30 % durch den Gegendrehmoment-Hilfsrotor (8,21) gewährleistet wird.

3. System nach einem der Ansprüche 1 oder 2,
dadurch gekennzeichnet, daß bei Vorwärtsflug mit Nennreisegeschwindigkeit der durch das Seitenleitwerk (12) erzeugte Seitenauftrieb (F3) die gesamte Gegendrehmomentfunktion sowie die Gierstabilität des Luftfahrzeugs gewährleistet.

4. System nach einem der Ansprüche 1 bis 3,
dadurch gekennzeichnet, daß das Seitenleitwerk (12) ein Hinterkantenruder (14) hat, und dadurch, daß dritte Steuermittel (16,17) für dieses Ruder vorgesehen sind.

5. System nach Anspruch 4,
dadurch gekennzeichnet, daß die dritten Steuermittel mit den ersten und zweiten Steuermitteln kombiniert sind und durch ein einziges Betätigungsorgan (17) bedient werden können.

6. System nach einem der Ansprüche 1 bis 5,
dadurch gekennzeichnet, daß durch die ersten Steuermittel die Stärke der ersten Querkraft (F1) durch Steuerung des Blattwinkels des Gegendrehmoment-Hilfsrotors (8,21) geregelt wird.

7. System nach einem der Ansprüche 1 bis 6,
dadurch gekennzeichnet, daß an den Längsschlitz (9) über ein Ventil die Abgase des Antriebsaggregats gelangen, und dadurch, daß durch die zweiten Steuermittel durch Steuerung des Ventils die Stärke der zweiten Querkraft geregelt wird.

8. System nach einem der Ansprüche 1 bis 6,
dadurch gekennzeichnet, daß an den Längsschlitz (9) über ein Gebläse (10) Luft gegeben wird, und dadurch daß durch die zweiten Steuermittel durch Steuerung des Gebläses (10) die Stärke der zweiten Querkraft geregelt wird.

9. System nach Anspruch 6 und 8,
dadurch gekennzeichnet, daß es eine gekoppelte Steuerung des Blattwinkels des Gegendrehmoment-Hilfsrotors (8,21) und des Schaufelwinkels des Gebläses (10) hat.

10. Hubschrauber (1,20) mit einem einzigen mechanisch angetriebenen Auf- und Vortriebsrotor (51) und einem nach hinten langgestreckten Rumpf (2,3),
dadurch gekennzeichnet,
- daß er mit einem Gegendrehmomentsystem ausgerüstet ist, das kombiniert umfaßt:
. einen Gegendrehmoment-Hilfsrotor (8,21), dessen Achse etwa quer zum langgestreckten Rumpf verläuft und der am hinteren Ende des Rumpfes angeordnet ist und eine erste Querkraft (F1) erzeugt, die dem durch den Antrieb des Auf- und Vortriebsrotors auf den Rumpf ausgeübten Drehmoment entgegenwirkt;
. eine Gegendrehmoment-Blasvorrichtung (9,10,11) mit mindestens einem Längsschlitz (9) seitlich in dem Teil (3) des langgestreckten Rumpfes, an den der Abwärtsstrom (S) des Auf- und Vortriebsrotors gelangt, wobei der Längsschlitz mit einem Druckmedium beaufschlagt wird, das nach unten mindestens annähernd tangential zum Rumpfteil austritt und eine zweite Querkraft (F2) gleichgerichtet zur ersten Kraft (F1) erzeugt;
. mindestens ein Seitenleitwerk (12), das am hinteren Ende des langgestreckten Rumpfes angeordnet ist und dessen Profil bei Vorwärtsflug einen Seitenauftrieb (F3) gleichgerichtet zur ersten und zweiten Querkraft ermöglicht, dessen Stärke derart ist, daß der Seitenauftrieb mindestens den größten Teil der Gegendrehmomentfunktion bei Vorwärtsflug gewährleistet;
. sowie erste Steuermittel (16,17) des Gegendrehmoment-Hilfsrotors, durch die die Stärke der ersten Querkraft geregelt werden kann, und
. zweite Steuermittel (16,17) der Gegendrehmoment-Blasvorrichtung, durch die die Stärke der zweiten Querkraft geregelt werden kann;
- daß die ersten und zweiten Steuermittel kombiniert sind und durch ein einziges Betätigungsorgan (17) bedient werden können und
- dadurch, daß:
. bei Schwebeflug oder sehr niedriger Vorwärtsgeschwindigkeit die Gegendrehmoment-Blasvorrichtung (9,10,11) mindestens den größten Teil der Gegendrehmomentfunktion gewährleistet;
. während der Gegendrehmoment-Hilfsrotor (8,21) bei allen Flugzuständen die Giersteuerung des Hubschraubers und die restlichen Gegendrehmomentfunktion gewährleistet.

11. Hubschrauber nach Anspruch 10,
dadurch gekennzeichnet, daß das Gegendrehmomentsystem die in einem der Ansprüche 2 bis 9 näher beschriebenen Besonderheiten umfaßt.
